# EUROPEAN PATENT APPLICATION

(11) **EP 4 603 192 A1**
(43) Date of publication of application: **20.08.2025**
(21) Application number: 22962404.4
(22) Date of filing: 20.10.2022
(51) Int. Cl.: B05C 5/02, H01M 4/04

(54) **COATING DEVICE FOR COATING ELECTRODE SHEET, AND BATTERY PRODUCTION SYSTEM**

(71) Applicant: Contemporary Amperex Technology (Hong Kong) Limited, Hong Kong (HK)
(72) Inventor: WENG, Zhirong, Ningde, Fujian 352100 (CN); JIANG, Liang, Ningde, Fujian 352100 (CN); LU, Lei, Ningde, Fujian 352100 (CN); LI, Shisong, Ningde, Fujian 352100 (CN)
(74) Representative: Gong, Jinping
(86) International application number: PCT/CN2022/126453
(87) International publication number: WO 2024/082217

(57) **Abstract**

Embodiments of the present application provide a coating device for coating electrode plates and a battery production system. The coating device includes: a first die head and a second die head connected with each other, wherein a flow channel is formed between the first die head and the second die head, and the flow channel includes a material inlet and a material outlet; and an adjusting member, wherein at least part of the adjusting member is detachably arranged in the flow channel, the adjusting member is used to adjust a size of a material along a width direction when the material is discharged from the material outlet, and the width direction is perpendicular to a stacking direction of the first die head and the second die head, and perpendicular to a direction from the material inlet to the material outlet. The coating device for coating electrode plates and the battery production system in the embodiments of the present application can improve the efficiency of electrode plate coating.

## Description

### TECHNICAL FIELD

The present application relates to the technical field of batteries, in particular to a coating device for coating electrode plates and a battery production system.

### BACKGROUND

With energy saving and emission reduction being the key to the sustainable development of automobile industry, electric vehicles have become an important part of the sustainable development of automotive industry due to their advantages of energy saving and environmental protection. For the electric vehicles, the battery technology is another important factor regarding their development.

In the process of preparing batteries, extrusion coating is often used to prepare electrode plates. When coating batteries' electrode plate substrates, substrates of different widths need to be coated to produce batteries of different models. In an existing coating process, various models of coating devices with different material outlet sizes are usually used to coat substrates of different sizes. The process is complicated, time-consuming, and material-consuming, and the processing efficiency is low.

### SUMMARY OF THE INVENTION

Embodiments of the present application provide a coating device for coating electrode plates and a battery production system, which can improve the efficiency of electrode plate coating.

In a first aspect, a coating device for coating electrode plates is provided, including: a first die head and a second die head connected with each other, wherein a flow channel is formed between the first die head and the second die head, and the flow channel includes a material inlet and a material outlet; and an adjusting member, wherein at least part of the adjusting member is detachably arranged in the flow channel, the adjusting member is used to adjust a size of a material along a width direction when the material is discharged from the material outlet, and the width direction is perpendicular to a stacking direction of the first die head and the second die head, and perpendicular to a direction from the material inlet to the material outlet.

Therefore, in the coating device of the embodiment of the present application, the width of the material when it is discharged from the material outlet can be adjusted by replacing adjusting members of different sizes when it needs to coat and process electrode plates of different sizes, without replacing die heads of different sizes, thereby greatly saving the number of die heads required in the production process, reducing the cost and manufacturing cycle of electrode plate processing and improving the processing efficiency of the electrode plates.

In some embodiments, the coating device includes two adjusting members, and the two adjusting members are arranged along the width direction so that the material passes through an area of the flow channel located between the two adjusting members and then is discharged from the material outlet.

If the two adjusting members are provided so that the material flows through and out between the two adjusting members, the outflow size of the material may be reduced from both ends of the original material outlet along the width direction. Compared with providing one adjusting member and reducing the outflow size of the material from one end, the consistency and uniformity of the material outflow can be better maintained, and it is also convenient for the position design of the adjusting members in the flow channel.

In some embodiments, end surfaces of the two adjusting members close to the material outlet have the same size along the width direction. In this way, along the width direction, the sizes that can be reduced by the two adjusting members respectively when the material is discharged are the same, which can ensure that the material does not all flow out from one side of the material outlet, and the consistency of the material with the reduced outflow width during outflow is ensured as far as possible, so as to ensure the coating effect.

In some embodiments, the two adjusting members are symmetrically distributed with respect to a central axis of the flow channel. In order to ensure the consistency of the material along the width direction when it flows out from the material outlet, the flow channel is usually configured as an axisymmetric structure, and the central axis or symmetry axis of the flow channel is parallel to the direction from the material inlet to the material outlet. Therefore, by symmetrically arranging the two adjusting members along the central axis of the flow channel, when the material passes between the two adjusting members, an actual flow path of the material is still symmetrical along the central axis of the flow channel, thereby ensuring the consistency and uniformity of the material outflow even when the outflow width of the material is reduced, so that the coating effect is ensured.

In some embodiments, a size of the material along the width direction when the material is discharged from the material outlet is greater than a size of the material inlet along the width direction. The material inlet is used to transport the material into the flow channel. Therefore, the size of the material inlet along the width direction is set to be smaller to facilitate the connection between the material inlet and a material providing component to meet the design requirements. The material outlet is used to output the material and coat the electrode plates. Therefore, after adjustment by the adjusting members, the size along the width direction when the material is discharged from the material outlet should meet the coating width requirement of the electrode plates to be coated, which is usually larger than the size of the material inlet along the width direction.

In some embodiments, the flow channel includes a material channel located between the material inlet and the material outlet through which the material flows, and an inner wall of the material channel includes a portion of an inner wall of the flow channel and a portion of a surface of the adjusting member. Since the adjusting member is at least partially located in the flow channel, it will block at least part of the space in the flow channel, so that an actual path through which the material can pass in the flow channel becomes smaller, that is, the flow channel and the adjusting member together form the material channel through which the material passes. For example, when the first die head and the second die head are engaged, a middle area of the flow channel and the adjusting member are enclosed to form the material channel, thereby reducing the path size of the material.

In some embodiments, along the stacking direction of the first die head and the second die head, an orthographic projection of an end of the material inlet close to the material outlet is a line segment AA', an orthographic projection of the material channel on an end of the material outlet away from the material inlet is a line segment BB', intersections between a projection of the line segment BB' along a direction from the material outlet to the material inlet with the inner wall of the flow channel are C and C' respectively, and an orthographic projection of an edge of the inner wall of the material channel is located in a triangular area ABC and/or a triangular area A'B'C'.

The edge of the adjusting member facing the material may be any curve or straight line in the triangular area ABC and/or the triangular area A'B'C', so that the material can pass through the material channel and flow out more smoothly, reducing the accumulation of the material in the material channel and thus improving the coating efficiency.

In some embodiments, along the direction from the material inlet to the material outlet, a size of the material channel along the width direction gradually increases. In this way, the material enters the material channel through the material inlet, and the size of the material channel gradually increases along the width direction, which can avoid the accumulation of the material in the material channel, improve the stability of material extrusion, and avoid the phenomena of cracking or bulging of a coating caused by the unstable speed of the material at the material outlet, thereby improving the coating effect and ensuring the coating efficiency.

In some embodiments, along the direction from the material inlet to the material outlet, inner walls of the material channel that are oppositely arranged along the width direction include straight line segments and/or arc segments. The specific shape of the material channel may be adjusted according to the specifications of the material to ensure the consistency of the flow rate of the material in the material channel.

In some embodiments, the material channel includes a first channel connected to the material inlet and a second channel connected to the material outlet. Along the direction from the material inlet to the material outlet, a size of the first channel along the width direction gradually increases, and a size of the second channel along the width direction remains unchanged.

Along the direction from the material inlet to the material outlet, the size of the first channel connected to the material inlet along the width direction gradually increases, which is beneficial to gradually and evenly guide the material entering from the material inlet with a smaller width to the material outlet; while the size of the second channel connected to the material outlet along the width direction remains unchanged, that is, the size of the second channel along the width direction is equal to a width of the material outlet. Before reaching the material outlet, the material first passes through the second channel with the same width as the material outlet, which can avoid the problem of the unstable material flow rate, and can help to meet the coating width of the material outlet and ensure the uniformity of the extrusion speed.

In some embodiments, along the stacking direction of the first die head and the second die head, a size of the first channel is greater than a size of the second channel. Along the stacking direction of the first die head and the second die head, the size of the first channel is larger, which can ensure that the material enters the material channel smoothly from the material inlet and avoid accumulation at the material inlet, while the size of the second channel is smaller, which is beneficial to the flow of the material and to gradually extrude the material into a thin layer, so that it can flow out from the slit-shaped material outlet and meet the coating width.

In some embodiments, along the stacking direction of the first die head and the second die head, a size of the material channel is smaller than a size of the material inlet and is greater than or equal to a size of the material outlet. Along the stacking direction of the first die head and the second die head, a height of the material inlet is greater than a height of the material flow channel, and the height of the material flow channel is greater than a height of the material outlet. The material flow channel can be used to transitionally connect the material inlet and the material outlet to improve the consistency of the flow rate of slurry.

In some embodiments, the first die head is provided with a first groove opening toward the second die head, the first groove is used to form the flow channel, a second groove is formed in an edge of a bottom wall of the first groove, the second groove extends from the material inlet to the material outlet, and a depth of the second groove is greater than a depth of the first groove.

If no adjusting member is provided, the size of the material outlet is larger along the width direction. In order to ensure that the material entering the material inlet can fulfill the material outlet along the width direction, the second groove with a greater depth is usually provided. The second groove located at the edge extends from the material inlet to the material outlet, so that after the material enters the material inlet, the middle part can flow from the first groove to the middle area of the material outlet, and part of the material can flow along the second groove, and then gradually spread from the second groove to other areas of the first groove, so as to ensure the consistency of the material at the material outlet along the width direction, thereby ensuring the coating effect.

In some embodiments, the adjusting member includes a first part and a second part connected to each other, the first part is located in an area of the first groove other than the second groove, the second part is located in the second groove, and the second part is used to limit the position of the adjusting member.

Since the depth of the second groove is greater than that of the first groove, a thickness of the second part of the adjusting member disposed in the second groove is greater than a thickness of the first part disposed in the first groove, so that the adjusting member can be stably clamped between the first die head and the second die head. The second part can especially limit the movement of the adjusting member along the direction from the material inlet to the material outlet, thereby achieving the purpose of fixing the adjusting member, thus improving the coating stability of the coating device, and ensuring the coating effect.

In some embodiments, the first die head includes a first opening, the second die head includes a second opening corresponding to the first opening, and the first opening and the second opening are used to form the material inlet when the first die head and the second die head are engaged.

The material inlet formed by the first opening and the second opening together is located on a side face of the coating device, so that the material enters the flow channel from the material inlet and flows out from the material outlet. The entire flow direction of the material remains basically consistent to avoid material accumulation. On the contrary, if the material inlet is arranged on the first die head or on the second die head, for example, the material inlet is arranged on the first die head, and the material inlet is arranged to extend from a surface away from the second die head to the second die head to penetrate the first die head, then the direction in which the material enters the flow channel from the material inlet is inconsistent with the direction in which the material flows out from the material outlet. For example, the two are approximately perpendicular, which may cause the material to accumulate in right-angle areas, especially materials with high solid contents, which have high viscosity and poor fluidity, and are likely to cause the material to accumulate and gradually solidify, thereby affecting the speed and uniformity of the material flowing out from the material outlet, thus affecting the coating effect and reducing the coating efficiency.

In some embodiments, a size of the end surface of the adjusting member close to the material outlet along the width direction is greater than or equal to 10 mm. If the size along the width direction of the end face of the adjusting member close to the material outlet is too small, the strength of the adjusting member will be relatively small, and an adjusting member with too small a size will also increase the difficulty in machining and fixing the adjusting member.

In some embodiments, roughness of a surface of the adjusting member facing the first die head is less than or equal to 0.4 µm, so that the adjusting member fits tightly with the first die head, self-sealing may also be achieved, and the adjusting member may be clamped and fixed; in addition, a relatively smooth adjusting member may also avoid scratching the inner wall of the flow channel.

In some embodiments, roughness of a surface of the adjusting member in contact with the material is less than or equal to 0.1 µm. The roughness of the surface of the adjusting member in contact with the material will affect the flow rate of the material in the material channel. Therefore, setting the roughness of the surface of the adjusting member in contact with the material to be smaller may reduce the obstruction between the material and the surface, thus ensuring the consistency of the flow rate of the material, and further ensuring the coating effect of the coating device.

In some embodiments, elastic modulus of the adjusting member is less than or equal to 20% of elastic modulus of the first die head and greater than or equal to 10 MPa. If the elastic modulus of the adjusting member is set too small, the adjusting member may not be able to withstand extrusion. For example, the extrusion of the material on the adjusting member may cause the adjusting member to deform or even break, thereby affecting the coating effect of the material. On the contrary, if the elastic modulus of the adjusting member is set too large, the adjusting member may be too hard, and the adjusting member may not be able to fit tightly with the first die head and the second die head when it is arranged in the flow channel between the first die head and the second die head. For example, it may not fit with the edge of the flow channel, which will cause the material to flow into a gap between the adjusting member and the flow channel, and it is very likely to cause the material to flow out from other areas except the material channel, affecting the coating effect. Therefore, the elastic modulus of the adjusting member should not be set too large or too small, so that when the first die head and the second die head clamp the adjusting member, the adjusting member may be deformed appropriately to adapt to manufacturing errors and achieve self-sealing, and it can also avoid the material being too hard to damage the inner wall of the flow channel.

In a second aspect, a battery production system is provided, including: the coating device described in the first aspect.

### BRIEF DESCRIPTION OF THE DRAWINGS

Fig. 1 is a schematic structural diagram of a coating device disclosed in an embodiment of the present application.
Fig. 2 is a cross-sectional schematic diagram of a coating device disclosed in an embodiment of the present application.
Fig. 3 is a schematic structural diagram of a first die head disclosed in an embodiment of the present application.
Fig. 4 is a schematic structural diagram of a first die head provided with adjusting members disclosed in an embodiment of the present application.
Fig. 5 to Fig. 8 are schematic structural diagrams of first die heads provided with different adjusting members disclosed in embodiments of the present application respectively.
Fig. 9 to Fig. 12 are several possible schematic structural diagrams of adjusting members disclosed in an embodiment of the present application respectively.
Fig. 13 is a schematic structural diagram of another first die head disclosed in an embodiment of the present application.
Fig. 14 is a schematic structural diagram of another first die head provided with adjusting members disclosed in an embodiment of the present application.

In the drawings, the figures are not drawn to the actual scale.

### DETAILED DESCRIPTION

Implementations of the present application are described in further detail below in conjunction with the drawings and embodiments. The following detailed description of the embodiments and the drawings are configured to illustrate the principles of the present application by way of example, but should not be configured to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are used for descriptive purposes only, and cannot be construed as indicating or implying relative importance. "Perpendicular" is not strictly perpendicular, but within the allowable range of errors. "Parallel" is not strictly parallel, but within the allowable range of errors.

Orientation words appearing in the following description are all directions shown in the drawings, and do not limit the specific structure of the present application. In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

In the embodiments of the present application, the same reference numerals indicate the same parts and, for the sake of brevity, the detailed description of the same parts is omitted in the different embodiments. It should be understood that the thickness, length, width and other sizes of the various components in the embodiments of the present application shown in the drawings, as well as the overall thickness, length, width and other sizes of an integrated apparatus, are for illustrative purposes only, and should not constitute any limitation to the present application.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, the demand in the market is also constantly expanding.

The power battery mentioned in the embodiments of the present application refers to a single physical module including one or a plurality of battery cells to provide a higher voltage and capacity. For example, the battery mentioned in the present application may include a battery module, a battery pack, or the like. The battery generally includes a box for packaging one or more battery cells. The box can prevent liquid or other foreign matters from affecting charging or discharging of the battery cells.

In the present application, the battery cell may include a lithium-ion secondary battery, a lithium-ion primary battery, a lithium sulfur battery, a sodium lithium-ion battery, a sodium-ion battery or a magnesium-ion battery and so on, which will not be limited in the embodiments of the present application. The battery cell may be in a cylindrical shape, a flat shape, a cuboid shape or another shape, which is also not limited in the embodiments of the present application. The battery cell is generally divided into three types according to packaging manners: a cylindrical battery cell, a square battery cell, and a pouch cell, which are not limited in the embodiments of the present application.

The battery cell includes an electrode assembly and an electrolyte solution, the electrode assembly being composed of a positive electrode plate, a negative electrode plate and a separator. The battery cell operates mainly relying on the movement of metal ions between the positive electrode plate and the negative electrode plate. The positive electrode plate includes a positive electrode current collector and a positive electrode active material layer, a surface of the positive electrode current collector is coated with the positive electrode active material layer, the positive electrode current collector not coated with the positive electrode active material layer protrudes from the positive electrode current collector already coated with the positive electrode active material layer, and the positive electrode current collector not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, etc. The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative tab. The material of the negative electrode current collector may be copper, and the negative electrode active material may be carbon, silicon, etc. In order to ensure that no fusing occurs when a large current passes, there are multiple positive tabs which are stacked together, and there are multiple negative tabs which are stacked together. The separator may be polypropylene (PP), polyethylene (PE), etc. In addition, the electrode assembly may have a wound structure or a laminated structure, but the embodiments of the present application are not limited thereto.

In the process of preparing an electrode plate, a coating device is usually used to extrude and coat a material on a current collector of the electrode plate to form a coating layer. During the battery coating process, electrode plates with different coating widths will be required according to the product design of different batteries. Since there is no mature method for adjusting the coating width, it is currently necessary to design a variety of coating devices with flow channels of different extrusion widths to meet the production requirements of electrode plates with different coating widths. This requires designing and producing multiple die heads during the production, which is costly and has a long manufacturing cycle.

Therefore, an embodiment of the present application provides a coating device for coating electrode plates. The coating device includes a first die head and a second die head, wherein a flow channel is formed between the first die head and the second die head, and the flow channel includes a material inlet and a material outlet. The coating device further includes an adjusting member, wherein at least part of the adjusting member is detachably arranged in the flow channel, and the adjusting member can adjust a size of a material along a width direction when the material is discharged from the material outlet. In this way, if electrode plates of different sizes need to be coated and processed, the width of the material when it is discharged from the material outlet can be adjusted by replacing adjusting members of different sizes, without replacing die heads of different sizes, thereby greatly saving the number of die heads required in the production process, reducing the cost and manufacturing cycle of electrode plate processing and improving the processing efficiency of the electrode plates.

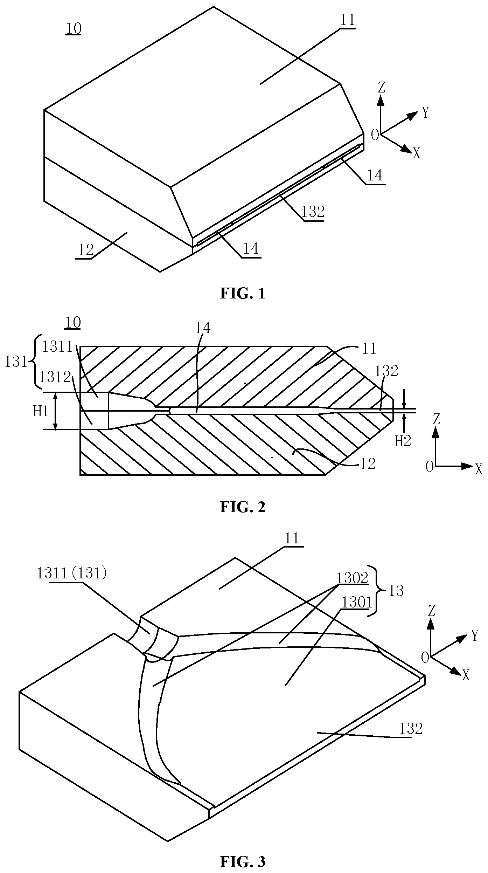

Fig. 1 shows a schematic structural diagram of a coating device 10 for coating electrode plates in an embodiment of the present application. Fig. 2 shows a cross-sectional schematic diagram of the coating device 10 for coating the electrode plates in the embodiment of the present application. For example, the coating device 10 shown in Fig. 2 may be the cross-sectional schematic diagram of the coating device 10 shown in Fig. 1. As shown in Fig. 1 and Fig. 2, the coating device 10 includes: a first die head 11 and a second die head 12 connected with each other, wherein a flow channel 13 is formed between the first die head 11 and the second die head 12, and the flow channel 13 includes a material inlet 131 and a material outlet 132; and adjusting members 14, wherein at least part of each of the adjusting members 14 is detachably arranged in the flow channel 13, the adjusting members 14 are used to adjust a size of a material along a width direction Y when the material is discharged from the material outlet 132, and the width direction Y is perpendicular to a stacking direction Z of the first die head 11 and the second die head 12, and perpendicular to a direction X from the material inlet 131 to the material outlet 132.

It should be understood that the forming manner of the flow channel 13 in the embodiment of the present application may be set according to the actual application. For example, the first die head 11 may be provided with a groove opening toward the second die head 12 so as to form the flow channel 13 when the first die head 11 and the second die head 12 are engaged. Alternatively, the second die head 12 may be provided with a groove opening toward the first die head 11 so as to form the flow channel 13 when the first die head 11 and the second die head 12 are engaged. Alternatively, the first die head 11 may be provided with a groove opening toward the second die head 12, and at the same time, the second die head 12 may be provided with a groove opening toward the first die head 11, so that the flow channel 13 may be formed when the first die head 11 and the second die head 12 are engaged, but the embodiment of the present application is not limited to this.

For convenience of description, in the embodiment of the present application, three directions are defined. As shown in Fig. 1 and Fig. 2, the stacking direction of the first die head 11 and the second die head 12 in the embodiment of the present application is the direction Z, and the direction from the material inlet 131 to the material outlet 132 is the direction X, wherein the width direction Y, the direction X from the material inlet 131 to the material outlet 132, and the stacking direction Z of the first die head 11 and the second die head 12 are perpendicular to one another. For example, the cross section shown in Fig. 2 may be a cross section of the coating device 10 perpendicular to the width direction Y.

It should be understood that at least part of the adjusting members 14 in the embodiment of the present application is arranged in the flow channel 13, so the adjusting members 14 may have a part of area arranged in the flow channel 13, and may also have a part of area arranged outside the flow channel 13; or, the adjusting members 14 may also be entirely arranged in the flow channel 13, and the embodiment of the present application is not limited to this. In addition, at least part of the adjusting members 14 is detachably arranged in the flow channel 13, so at least part of the adjusting members 14 and the flow channel 13 may be fixed to each other and may also be detached from each other. For example, a plurality of adjusting members 14 of different sizes may be provided, and each adjusting member 14 may be at least partially arranged in the flow channel 13, and each adjusting member 14 may be detachable from the flow channel 13 to facilitate replacement of different adjusting members 14, so that at least part of each adjusting member 14 among the different adjusting members 14 may be arranged in the flow channel 13 to adjust the size of the material when it flows out from the material outlet 132.

The fixing manner and detaching manner between at least part of the adjusting members 14 and the flow channel 13 may be flexibly set according to the actual application, which is not limited by the embodiment of the present application. For example, the adjusting members 14 may be fixed in the flow channel 13 by clamping, and then the adjusting members 14 may be detached in a case that the first die head 11 and the second die head 12 that form the flow channel 13 are moved. For another example, the adjusting members 14 may also be fixed to the flow channel 13 through limiting pins, and then the adjusting members 14 may be detached by pulling out the limiting pins, but the embodiment of the present application is not limited to this.

In the coating device 10 of the embodiment of the present application, the width of the material when it is discharged from the material outlet 132 can be adjusted by replacing the adjusting members 14 of different sizes when it needs to coat and process electrode plates of different sizes, without replacing the die heads of different sizes, thereby greatly saving the number of die heads required in the production process, reducing the cost and manufacturing cycle of electrode plate processing and improving the processing efficiency of the electrode plates.

It should be understood that the first die head 11 and the second die head 12 of the embodiment of the present application may adopt the same or different designs. For example, the first die head 11 and the second die head 12 may have the same or different sizes, and may have the same or different shapes. For another example, the embodiment of the present application is mainly described by taking the example of arranging the first die head 11 and the second die head 12 to be a completely symmetrical structure, which is convenient for processing. For the convenience of description, the embodiment of the present application is mainly described by taking the first die head 11 as an example, but the relevant description is also applicable to the second die head 12, and for the sake of brevity, it will not be repeated here.

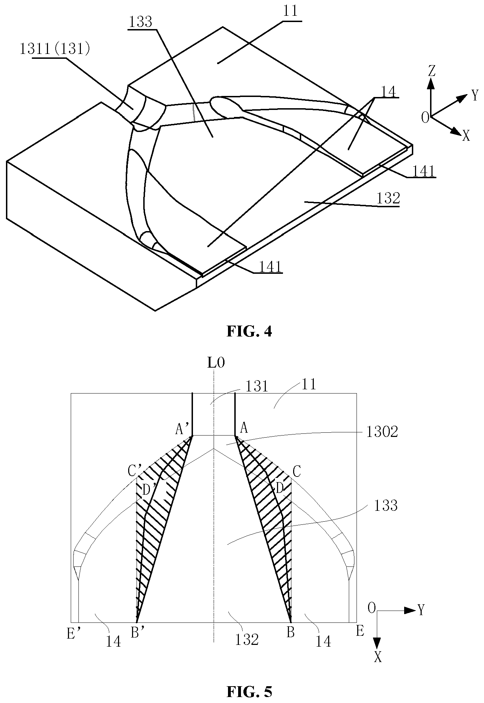

Fig. 3 shows a schematic structural diagram of the first die head 11 in the embodiment of the present application. Fig. 4 shows a schematic structural diagram of the first die head 11 provided with the adjusting members 14 in the embodiment of the present application. As shown in Fig. 2 to Fig. 4, the first die head 11 in the embodiment of the present application is provided with a first groove 1301, and correspondingly, the second die head 12 is also provided with a groove corresponding to the first groove 1301, so as to form the flow channel 13 when the first die head 11 and the second die head 12 are engaged. Specifically, the flow channel 13 in the embodiment of the present application includes the material inlet 131 and the material outlet 132. The material inlet 131 is used to transport materials into the flow channel 13, and the material outlet 132 is used for the materials to flow out of the flow channel 13 for coating and processing the electrode plates. Since the adjusting members 14 are arranged in the flow channel 13, only a part of area of the flow channel 13 in the embodiment of the present application may be in direct contact with the material, and a part of area of the flow channel 13 may be in direct contact with the adjusting members 14 and blocked by the adjusting members 14 from direct contact with the material.

Optionally, the material inlet 131 in the embodiment of the present application may be located at any position of the first die head 11 and the second die head 12. For example, as shown in Fig. 2 to Fig. 4, the first die head 11 includes a first opening 1311, the second die head 12 includes a second opening 1312 corresponding to the first opening 1311, and the first opening 1311 and the second opening 1312 are used to form the material inlet 131 when the first die head 11 and the second die head 12 are engaged. The material inlet 131 formed by the first opening 1311 and the second opening 1312 together is located on a side face of the coating device 10, so that the material enters the flow channel 14 from the material inlet 131 and flows out from the material outlet 132. The entire flow direction of the material remains basically consistent to avoid material accumulation. On the contrary, if the material inlet 131 is arranged on the first die head 11 or on the second die head 12, for example, the material inlet 131 is arranged on the first die head 11, and the material inlet 131 is arranged to extend from a surface of the first die head 11 away from the second die head 12 to the second die head 12 to penetrate the first die head 11, then the direction in which the material enters the flow channel 13 from the material inlet 131 is inconsistent with the direction in which the material flows out from the material outlet 132. For example, the two are approximately perpendicular, which may cause the material to accumulate in right-angle areas, especially materials with high solid contents, which have high viscosity and poor fluidity, and are likely to cause the material to accumulate and gradually solidify, thereby affecting the speed and uniformity of the material flowing out from the material outlet 132, thus affecting the coating effect and reducing the coating efficiency.

It should be understood that the flow channel 13 in the embodiment of the present application may be divided into three sections along its extension direction X or along a length direction X of the flow channel 13, that is, the flow channel 13 may include the material inlet 131, the material outlet 132 and a middle flow channel located between the material inlet 131 and the material outlet 132. As shown in Fig. 2 to Fig. 4, the material inlet 131 in the embodiment of the present application may include a starting end face of the flow channel 13, and may also include a portion of the flow channel 13, that is, the material inlet 131 may start from an entrance of the flow channel 13 and extend a distance along the length direction X of the flow channel 13, that is, the material inlet 131 may be designed as a flow channel section with an equal-width cross-section of a certain length to facilitate processing.

Similarly, as shown in Fig. 2 to Fig. 4, the material outlet 132 in the embodiment of the present application may also include a part of the flow channel 13, that is, the material outlet 132 may extend from a position of the flow channel 13 near an exit toward the exit along the length direction X of the flow channel 13, that is, the material outlet 132 may be arranged as a flow channel section with an equal-width cross-section of a certain length, which may increase the flow resistance at the exit and improve the uniformity of the speed at the exit.

The adjusting members 14 in the embodiment of the present application will be described in detail below in combination with the design of the flow channel 13.

Optionally, in the embodiment of the present application, the coating device 10 includes two adjusting members 14, and the two adjusting members 14 are arranged along the width direction Y so that the material passes through an area of the flow channel 13 located between the two adjusting members 14 and then is discharged from the material outlet 132. Specifically, in the embodiment of the present application, the shape of the flow channel 13 may be flexibly set according to actual applications, and correspondingly, the shape of the adjusting members 14 may also be flexibly set according to the flow channel 13. For example, the material outlet 132 of the flow channel 13 in the embodiment of the present application may be arranged as a slit, and the size of the material outlet 132 along the width direction Y is relatively large. If the two adjusting members 14 are provided so that the material flows through and out between the two adjusting members 14, the outflow size of the material may be reduced from both ends of the original material outlet 132 along the width direction Y. Compared with providing one adjusting member 14 and reducing the outflow size of the material from one end, the consistency and uniformity of the material outflow can be better maintained, and it is also convenient for the position design of the adjusting members 14 in the flow channel 13.

In the embodiment of the present application, end surfaces 141 of the two adjusting members 14 close to the material outlet 132 have the same size along the width direction Y. In this way, along the width direction Y, the sizes that can be reduced by the two adjusting members 14 respectively when the material is discharged are the same, which can ensure that the material does not all flow out from one side of the material outlet 132, and the consistency of the material with the reduced outflow width during outflow is ensured as far as possible, so as to ensure the coating effect.

Further, the two adjusting members 14 are symmetrically distributed with respect to a central axis of the flow channel 13. In order to ensure the consistency of the material along the width direction Y when it flows out from the material outlet 132, the flow channel 13 is usually configured as an axisymmetric structure, and the central axis or symmetry axis of the flow channel 13 is parallel to the direction X from the material inlet 131 to the material outlet 132. Therefore, by symmetrically arranging the two adjusting members 14 along the central axis of the flow channel 13, when the material passes between the two adjusting members 14, an actual flow path of the material is still symmetrical along the central axis of the flow channel 13, thereby ensuring the consistency and uniformity of the material outflow even when the outflow width of the material is reduced, so that the coating effect is ensured.

For ease of description, the embodiment of the present application is described below by taking the case where the two adjusting members 14 symmetrically distributed with respect to the central axis of the flow channel 13 are arranged in the flow channel 13 as an example, and is mainly described by taking any one of the adjusting members 14 as an example, but the relevant description is applicable to the two adjusting members 14, and for the sake of brevity, it will not be repeated here.

Fig. 5 to Fig. 8 respectively show schematic diagrams of possible relative positions between the first die head 11 and several types of adjusting members 14 in embodiments of the present application. As shown in Fig. 5 to Fig. 8, for the convenience of description, description is first made below by taking a coat-hanger type flow channel 13 as an example, but the embodiments of the present application are not limited thereto.

In the embodiment of the present application, a size W1 of the material along the width direction Y when the material is discharged from the material outlet 132 is greater than a size W2 of the material inlet 131 along the width direction Y. Specifically, the material inlet 131 is used to transport the material into the flow channel 13. Therefore, the size W1 of the material inlet 131 along the width direction Y is set to be smaller to facilitate the connection between the material inlet 131 and a material providing component to meet the design requirements. The material outlet 132 is used to output the material and coat the electrode plates. Therefore, after adjustment by the adjusting members 14, the size W2 along the width direction Y when the material is discharged from the material outlet 132 should meet the coating width requirement of the electrode plates to be coated, which is usually larger than the size W1 of the material inlet 131 along the width direction Y.

In the embodiment of the present application, the flow channel 13 includes a material channel 133 located between the material inlet 131 and the material outlet 132 through which the material flows, and an inner wall of the material channel 133 includes a portion of an inner wall of the flow channel 13 and a portion of surfaces of the adjusting members 14. Specifically, as shown in Fig. 5 to Fig. 8, since the adjusting members 14 are at least partially located in the flow channel 13, it will block at least part of the space in the flow channel 13, so that an actual path through which the material can pass in the flow channel 13 becomes smaller, that is, the flow channel 13 and the adjusting members 14 together form the material channel 133 through which the material passes. For example, when the first die head 11 and the second die head 12 are engaged, a middle area of the flow channel 13 and the adjusting members 14 are enclosed to form the material channel 133.

It should be understood that the sizes and shapes of the adjusting members 14 in the embodiment of the present application may be set according to the actual application. For example, after the material enters the material channel 133, in order to avoid the material from accumulating in the material channel 133, which causes part of the material to be unable to flow out through the material channel 133, and accumulating in the material channel 133 to form a "dead zone", the embodiment of the present application has certain restrictions on the sizes of the adjusting members 14. Especially for materials with high solid contents, due to the high viscosity and poor fluidity of the materials, it is very likely that the materials will accumulate in the material channel 133 and gradually solidify, thereby forming a "dead zone" in the material channel 133. For example, as an embodiment, along the direction X from the material inlet 131 to the material outlet 132, the material channel 133 generally does not include an area with a gradually decreasing width. For example, the material channel 133 may include an area with a constant width or an area with a gradually increasing width. In this way, there is no edge protruding toward the material in the material channel 133, which can avoid the accumulation of the material in this area, thereby ensuring the coating speed and efficiency of the coating device 10.

For another example, as another embodiment, edges of the adjusting members 14 facing the material may further be arranged in a certain area. Specifically, along the stacking direction Z of the first die head 11 and the second die head 12, an orthographic projection of an end of the material inlet 131 close to the material outlet 132 is a line segment AA', an orthographic projection of the material channel 133 on an end of the material outlet 132 away from the material inlet 131 is a line segment BB', intersections between a projection of the line segment BB' along a direction from the material outlet 132 to the material inlet 131 with the inner wall of the flow channel 13 are C and C' respectively, and an orthographic projection of an edge of the inner wall of the material channel 133 is located in a triangular area ABC and/or a triangular area A'B'C'.

As shown in Fig. 5, an example is taken here where two adjusting members 14 arranged at intervals along the width direction are arranged in the flow channel 13, and the material channel 133 is located between the two adjusting members 14. Specifically, along the stacking direction Z of the first die head 11 and the second die head 12, the orthographic projection of the material inlet 131 is approximately rectangular, wherein along the width direction Y, a width of one end of the material inlet 131 of the flow channel 13 close to the material outlet 132 is represented as AA'. Along the width direction Y, an original width of one end of the material outlet 132 of the flow channel 13 away from the material inlet 131 is represented as EE'. By arranging the two adjusting members 14, the width of the material channel 133 at the end of the material outlet 132 away from the material inlet 131 is reduced to BB', that is, the width of the material when discharged is represented as BB'. At this time, intersections between a projection of the line segment BB' along the direction from the material outlet 132 to the material inlet 131 and the inner wall of the flow channel 13 are C and C' respectively, that is, CB is set perpendicular to BE, and C'B' is set perpendicular to C'E', wherein C and C' are points on the edge of the inner wall of the original flow channel 13 respectively. By connecting an edge of the material inlet 131 and edges of the adjusting members 14, that is, connecting AB and A'B', a line segment AB, a line segment BC and an edge AC of the flow channel 13 may be enclosed to form a triangular area. Correspondingly, a line segment A'B', a line segment B'C' and an edge A'C' of the flow channel 13 may also be enclosed to form a triangular area, thereby obtaining two approximately-triangular shaded areas ABC and A'B'C' as shown in Fig. 5, wherein sides of the two triangular areas may include straight lines or curves. In order to avoid the accumulation of the material in the material channel 133, the edges of the adjusting members 14 facing the material are usually arranged not to exceed the range of the shaded area shown in Fig. 5, that is, the edges of the adjusting members 14 facing the material may be any curve or straight line ADB and A'D'B' in the shade, so that the material can pass through the material channel 133 and flow out more smoothly, reducing the accumulation of the material in the material channel 133, thereby improving the coating efficiency.

Optionally, the above two arranging manners may be used independently of each other, or, further, the above two manners may be combined. For example, as shown in Fig. 5, when selecting the edges of the adjusting members 14 in the shaded areas ABC and A'B'C', the edges may also be selected to satisfy: along the direction X from the material inlet 131 to the material outlet 132, the material channel 133 does not include an area with a gradually decreasing width, so that the effect of passing the material through the material channel 133 is better, and the accumulation of the material in the material channel 133 is greatly reduced, thereby ensuring the stability of the coating speed and the coating efficiency of the coating device 10.

The above-mentioned arranging manners can effectively prevent the accumulation of the material in the material channel 133 and can prevent the generation of the "dead zone" in the material channel 133. Especially in an extrusion coating process for materials with high solid contents, the materials are usually soft solids similar to mud, and the materials will gradually solidify in the "dead zone" to form a solidified boundary. Unstable changes in the solidified boundary will lead to instability in the extrusion procedure and the inability to stably meet the consistency requirement for the speed at an exit. Therefore, the coating device 10 in the embodiment of the present application can avoid the generation of the "dead zone" and is suitable for die heads required by production of the extrusion coating process for the materials with high solid contents. It can not only reduce manufacturing costs, but also can quickly respond to extrusion width adjustment requirements during production, thereby improving production efficiency.

The design of the material channel 133 will be described below by way of example with reference to the accompanying drawings.

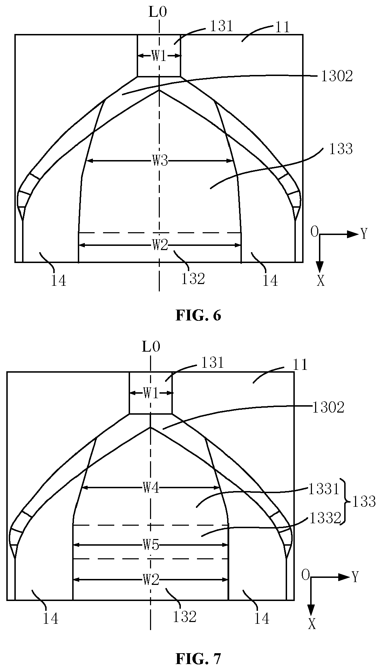

For example, as shown in Fig. 6, along the direction X from the material inlet 131 to the material outlet 132, a size W3 of the material channel 133 along the width direction Y gradually increases. In this way, the material enters the material channel 133 through the material inlet 131, and the size W3 of the material channel 133 gradually increases along the width direction Y, which can avoid the accumulation of the material in the material channel 133, improve the stability of material extrusion, and avoid the phenomena of cracking or bulging of a coating caused by the unstable speed of the material at the material outlet, thereby improving the coating effect and ensuring the coating efficiency.

Optionally, along the direction X from the material inlet 131 to the material outlet 132, the shapes of the inner walls of the material channel 133 that are oppositely arranged along the width direction Y may be set according to actual applications. For example, along the direction X from the material inlet 131 to the material outlet 132, the inner walls of the material channel 133 that are oppositely arranged along the width direction Y include straight line segments and/or arc segments. Along the direction X from the material inlet 131 to the material outlet 132, the inner walls of the material channel 133 that are oppositely arranged along the width direction Y may include at least part of an area of the original flow channel 13 and may also include at least part of areas of the adjusting members 14. Specifically, along the direction X from the material inlet 131 to the material outlet 132, the inner walls of the material channel 133 that are oppositely arranged along the width direction Y may include one or more straight line segments, and inclination angles of the plurality of straight line segments may be the same or different; or, the inner walls of the material channel 133 that are oppositely arranged along the width direction Y may include one or more arc segments, and curvatures of the plurality of arc segments may be the same or different; or, the inner walls of the material channel 133 that are oppositely arranged along the width direction Y may include both one or more straight line segments and one or more arc segments. For example, as shown in Fig. 6, a section of the material channel 133 connected to the material inlet 131 is an arc segment, and a section connected to the material outlet 132 is a straight line segment. The specific shape of the material channel 133 may be adjusted according to the specifications of the material to ensure the consistency of the flow rate of the material in the material channel 133.

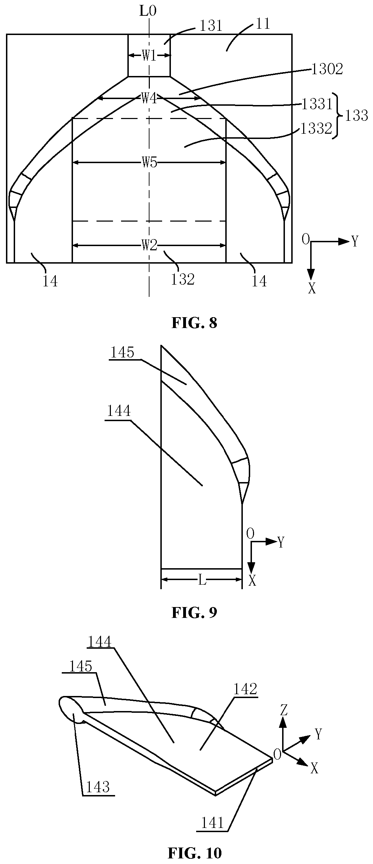

Optionally, different from the arranging manner shown in Fig. 6, the material channel 133 may also have other shapes. Specifically, as shown in Fig. 7 and Fig. 8, the material channel 133 includes a first channel 1331 connected to the material inlet 131 and a second channel 1332 connected to the material outlet 132. Along the direction X from the material inlet 131 to the material outlet 132, a size W4 of the first channel 1331 along the width direction Y gradually increases, and a size W5 of the second channel 1332 along the width direction Y remains unchanged.

Along the direction from the material inlet 131 to the material outlet 132, the size W4 of the first channel 1331 connected to the material inlet 131 along the width direction Y gradually increases, which is beneficial to gradually and evenly guide the material entering from the material inlet 131 with a smaller width to the material outlet 132; while the size W5 of the second channel 1332 connected to the material outlet 132 along the width direction Y remains unchanged, that is, the size W5 of the second channel 1332 along the width direction Y is equal to a width W2 of the material outlet 132. Before reaching the material outlet 132, the material first passes through the second channel 1332 with the same width W2 as the material outlet 132, which can avoid the problem of the unstable material flow rate, and can help to meet the coating width of the material outlet 132 and ensure the uniformity of the extrusion speed.

In some embodiments, along the width direction Y, the width of the portion of the first channel 1331 connected to the material inlet 131 is equal to the width W1 of the material inlet 131, and from the material inlet 131 to the material outlet 132, the width W4 of the first channel 1331 gradually widens, the width of the portion of the first channel 1331 connected to the second channel 1332 is equal to the width W5 of the second channel 1332, and the width W5 of the second channel 1332 is consistent with the width W2 of the material outlet 132.

Optionally, the arranging manner of the first channel 1331 is similar to that of the material channel 133 shown in Fig. 6, for example, along the direction X from the material inlet 131 to the material outlet 132, the shapes of inner walls of the first channel 1331 that are oppositely arranged along the width direction Y may be set according to actual applications. For example, along the direction X from the material inlet 131 to the material outlet 132, the inner walls of the first channel 1331 that are oppositely arranged along the width direction Y include straight line segments and/or arc segments, and the embodiment of the present application is not limited to this.

Optionally, the first channel 1331 may include an inner wall of the original flow channel 13, or the first channel 1331 includes both the inner wall of the original flow channel 13 and a part of the inner walls of the adjusting members 14. For example, as shown in Fig. 7, the first channel 1331 may include a part of area between the two adjusting members 14; or, as shown in Fig. 8, the first channel 1331 may not include a part of area between the two adjusting members 14, that is, the two adjusting members 14 are only used to form the second channel 1332, and the embodiment of the present application is not limited this.

In some embodiments, along the stacking direction Z of the first die head 11 and the second die head 12, a size of the first channel 1331 is greater than a size of the second channel 1332. Specifically, as shown in Fig. 7 and Fig. 8, along the stacking direction Z of the first die head 11 and the second die head 12, the size of the first channel 1331 is larger, which can ensure that the material enters the material channel 133 smoothly from the material inlet 131 and avoid accumulation at the material inlet 131, while the size of the second channel 1332 is smaller, which is beneficial to the flow of the material and to gradually extrude the material into a thin layer, so that it can flow out from the slit-shaped material outlet 132 and meet the coating width.

In the embodiment of the present application, as shown in Fig. 5 to Fig. 8, combined with Fig. 2, it can be seen that along the stacking direction Z of the first die head 11 and the second die head 12, a size H1 of the material inlet 131 is greater than a size H2 of the material outlet 132. The height H1 of the material inlet 131 is large, which is conducive to the material entering the flow channel 13, and the height H2 of the material outlet 132 is small, which is conducive to extruding the material into a coating that meets the width requirement, thereby improving the consistency of the material flow speed, and making the thickness and width of the coating uniform and stable.

Optionally, along the stacking direction Z of the first die head 11 and the second die head 12, the size of the material channel 133 is smaller than the size H1 of the material inlet 131 and is greater than or equal to the size H2 of the material outlet 132. Specifically, as shown in Fig. 5 to Fig. 8, combined with Fig. 2, it can be seen that, along the stacking direction Z of the first die head 11 and the second die head 12, the height H1 of the material inlet 131 is greater than a height of the material flow channel 133, and the height of the material flow channel 133 is greater than the height H2 of the material outlet 132. The material flow channel 133 can be used to transitionally connect the material inlet 131 and the material outlet 132 to improve the consistency of the flow rate of slurry.

It should be understood that in the embodiment of the present application, the various sizes of the flow channel 13 along the stacking direction Z of the first die head 11 and the second die head 12 all refer to: the sizes of different areas of the flow channel 13 on the cross section as shown in Fig. 2. The cross section shown in Fig. 2 is perpendicular to the width direction Y and passes through the central axis of the flow channel 13. For the convenience of description, the cross section is defined as a first plane herein. For example, the size H1 of the material inlet 131 or the height H1 of the material inlet 131 in the embodiment of the present application refers to: on the first plane, along the stacking direction Z of the first die head 11 and the second die head 12, a minimum value or average value of the sizes of different areas of the material inlet 131. Correspondingly, the size H2 of the material outlet 132 or the height H2 of the material outlet 132 in the embodiment of the present application refers to: on the first plane, along the stacking direction Z of the first die head 11 and the second die head 12, a minimum value or average value of the size of the material outlet 132. For example, if the material inlet 131 takes a minimum value, the material outlet 132 may also take a minimum value correspondingly; or, if the material inlet 131 takes an average value, the material outlet 132 may also take an average value correspondingly. Similarly, along the stacking direction Z of the first die head 11 and the second die head 12, the size of the material flow channel 133 or the height of the material flow channel 133 refers to: in the first plane, along the stacking direction Z, a minimum value or average value of the sizes of different areas of the material flow channel 133. Along the stacking direction Z of the first die head 11 and the second die head 12, the size of the first channel 1331 of the material flow channel 133 or the height of the first channel 1331 refers to: in the first plane, along the stacking direction Z, a minimum value or average value of the sizes of different areas of the first channel 1331. Along the stacking direction Z of the first die head 11 and the second die head 12, the size of the second channel 1332 of the material flow channel 133 or the height of the second channel 1332 refers to: in the first plane, along the stacking direction Z, a minimum value or average value of the sizes of different areas of the second channel 1332.

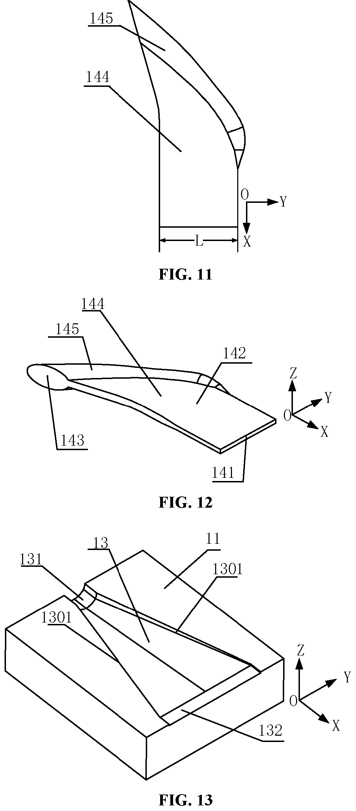

The adjusting members 14 in the embodiment of the present application will be described in detail below with reference to the accompanying drawings. Fig. 9 shows a schematic diagram of an adjusting member 14 in an embodiment of the present application, and Fig. 10 shows a schematic diagram of the adjusting member 14 from another angle in the embodiment of the present application. For example, Fig. 9 and Fig. 10 may be schematic diagrams of the adjusting member 14 in Fig. 8 from different angles. Fig. 11 shows a schematic diagram of another adjusting member 14 in an embodiment of the present application, and Fig. 12 shows a schematic diagram of another adjusting member 14 from another angle in the embodiment of the present application. For example, Fig. 11 and Fig. 12 may be schematic diagrams of the adjusting member 14 in Fig. 7 from different angles. As shown in Fig. 9 to Fig. 12, a shape of the adjusting member 14 in the embodiment of the present application may be set according to the shape of the flow channel 13.

For example, the first die head 11 is provided with a first groove 1301 opening toward the second die head 12, the first groove 1301 is used to form the flow channel 13, a second groove is formed in an edge of a bottom wall of the first groove 1301, the second groove 1302 extends from the material inlet 131 to the material outlet 132, and a depth of the second groove 1302 is greater than a depth of the first groove 1301. Specifically, referring to Fig. 3, it can be seen that, for the coat-hanger-shaped flow channel 13, if no adjusting member 14 is provided, the size of the material outlet 132 is larger along the width direction Y. In order to ensure that the material entering the material inlet 131 can fulfill the material outlet 132 along the width direction Y, the second groove 1302 with a greater depth is usually provided. The second groove 1302 located at the edge extends from the material inlet 131 to the material outlet 132, so that after the material enters the material inlet 131, the middle part can flow from the first groove 1301 to the middle area of the material outlet 132, and part of the material can flow along the second groove 1302, and then gradually spread from the second groove 1302 to other areas of the first groove 1301, so as to ensure the consistency of the material at the material outlet 132 along the width direction y, thereby ensuring the coating effect.

Corresponding to the shape of the above-mentioned flow channel 13, as shown in Fig. 9 to Fig. 12, the adjusting member 14 includes a first part 144 and a second part 145 connected to each other, the first part 144 is located in an area of the first groove 1301 other than the second groove 1302, the second part 145 is located in the second groove 1302, and the second part 145 is used to limit the position of the adjusting member 14. Since the depth of the second groove 1302 is greater than that of the first groove 1301, a thickness of the second part 145 disposed in the second groove 1302 is greater than a thickness of the first part 144 disposed in the first groove 1301, so that the adjusting member 14 can be stably clamped between the first die head 11 and the second die head 12. The second part 145 can especially limit the movement of the adjusting member 14 along the direction X from the material inlet 131 to the material outlet 132, thereby achieving the purpose of fixing the adjusting member 14, thus improving the coating stability of the coating device 10, and ensuring the coating effect.

Optionally, the adjusting member 14 may also be fixed to the first die head 11 or the second die head 12 through other structures, which is not limited in the embodiment of the present application. For example, a fixing structure may further be arranged on the first die head 11 and/or the second die head 12 so that at least part of the adjusting member 14 is fixed to the fixing structure, thereby fixing the adjusting member.

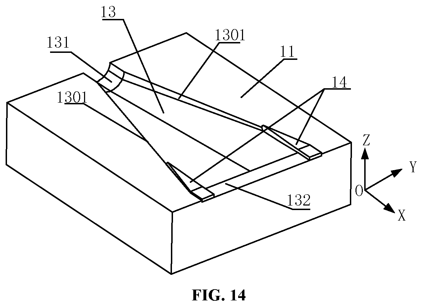

It should be understood that the above description mainly takes the coat-hanger-shaped flow channel 13 as an example, but the relevant description may also be applied to flow channels 13 in other shapes. For example, Fig. 13 shows a schematic structural diagram of a fishtail-shaped flow channel 13 in an embodiment of the present application; and Fig. 14 shows a schematic structural diagram of a fishtail-shaped flow channel 13 with an adjusting member 14 arranged inside in an embodiment of the present application. As shown in Fig. 13 and Fig. 14, a size in the width direction Y of the fishtail-shaped channel 13 gradually decreases along the direction from the material inlet 131 to the material outlet 132, and opposite inner walls of the flow channel 13 along the width direction Y are generally linear.

The arranging manner of the flow channel 13 and the adjusting member 14 shown in Fig. 13 and Fig. 14 is similar to that of the embodiment of the above coat-hanger-shaped flow channel 13, and will not be repeated here for the sake of brevity. Furthermore, for the flow channel 13 in commonly used shapes such as the coat hanger shape and the fishtail shape, the specific size and shape of the flow channel 13 may be determined according to the fluctuation range of the material flow characteristics through fluid dynamics analysis. By reasonably arranging the flow channel 13, when the material properties fluctuate, the outlet consistency requirement can be achieved with a smaller adjustment amount.

In the embodiment of the present application, the size along the width direction Y that can be reduced by the adjusting member 14 when the material flows out may be set according to actual applications. For example, a size L along the width direction Y of an end face 141 of the adjusting member 14 close to the material outlet 132 may be set to be greater than or equal to 10 mm, that is, the adjusting member 14 may reduce the size of the material along the width direction Y by at least 10 mm. If two symmetrical adjusting members 14 are arranged in the flow channel 13, then the two adjusting members 14 may reduce the size of the material along the width direction Y by at least 20 mm. If the size L along the width direction Y of the end face 141 of the adjusting member 14 close to the material outlet 132 is too small, the strength of the adjusting member 14 will be relatively small, and an adjusting member 14 with too small a size will also increase the difficulty in machining and fixing the adjusting member 14.

Therefore, the size L along the width direction Y of the end face 141 of the adjusting member 14 close to the material outlet 132 should not be too small. For example, the size L along the width direction Y of the end face 141 of the adjusting member 14 close to the material outlet 132 may be equal to 10 mm, 25 mm, 50 mm, 75 mm or 100 mm, and correspondingly, if two symmetrical adjusting members 14 are arranged in the flow channel 13, then the size of the material along the width direction Y that can be reduced by the two adjusting members 14 is 20 mm, 50 mm, 100 mm, 150 mm or 200 mm. In this way, by arranging the adjusting members 14 of different sizes, it is possible to adapt to the coating process requirements of electrode plates of different sizes, and to replace the adjusting members 14 of appropriate sizes according to the size requirements of the electrode plates.

It should be understood that, in the embodiment of the present application, roughness of a surface 142 of the adjusting member 14 facing the first die head 11 is less than or equal to 0.4 µm, so that the adjusting member 14 fits tightly with the first die head 11, self-sealing may also be achieved, and the adjusting member 14 may be clamped and fixed; in addition, a relatively smooth adjusting member 14 may also avoid scratching the inner wall of the flow channel 13.

In the embodiment of the present application, roughness of a surface 143 of the adjusting member 14 in contact with the material is less than or equal to 0.1 µm. The roughness of the surface 143 of the adjusting member 14 in contact with the material will affect the flow rate of the material in the material channel 133. Therefore, setting the roughness of the surface 143 of the adjusting member 14 in contact with the material to be smaller may reduce the obstruction between the material and the surface 143, thus ensuring the stability of the flow rate of the material, and further ensuring the coating effect of the coating device 10.

It should be understood that the above-mentioned "roughness" in the embodiment of the present application may refer to an arithmetic mean deviation (Ra) of the profile of the corresponding surface.

In the embodiment of the present application, elastic modulus of the adjusting member 14 is less than or equal to 20% of elastic modulus of the first die head 11 and greater than or equal to 10 MPa. If the elastic modulus of the adjusting member 14 is set too small, the adjusting member 14 may not be able to withstand extrusion. For example, the extrusion of the material on the adjusting member 14 may cause the adjusting member 14 to deform or even break, thereby affecting the coating effect of the material. On the contrary, if the elastic modulus of the adjusting member 14 is set too large, the adjusting member 14 may be too hard, and the adjusting member 14 may not be able to fit tightly with the first die head 11 and the second die head 12 when it is arranged in the flow channel 13 between the first die head 11 and the second die head 12. For example, it may not fit with the edge of the flow channel 13, which will cause the material to flow into a gap between the adjusting member 14 and the flow channel 13, and it is very likely to cause the material to flow out from other areas except the material channel 133, affecting the coating effect.

Therefore, the elastic modulus of the adjusting member 14 should not be set too large or too small, so that when the first die head 11 and the second die head 12 clamp the adjusting member 14, the adjusting member 14 may be deformed appropriately to adapt to manufacturing errors and achieve self-sealing, and it can also avoid the material being too hard to damage the inner wall of the flow channel 13. For example, the material of the adjusting member 14 may be set to be polytetrafluoroethylene, whose elastic modulus is 0.5 GPa; and thus, if the material of the first die head 11 and the second die head 12 is stainless steel, whose elastic modulus is 200 GPa, then the elastic modulus of the adjusting member 14 is 1/400 of that of the first die head 11, meeting the design requirements.

In an embodiment of the present application, a battery production system is further provided, including the coating device 10 in the above embodiment. In some embodiments, the battery production system further includes an electrode plate providing device, which is configured to provide electrode plates, and the coating device 10 is configured to extrude a coating material onto the electrode plates to form coating layers.

Since the battery production system provided in the embodiment of the present application includes the coating device 10 provided in the embodiment of the present application, the battery production system provided in the embodiment of the present application correspondingly possesses the beneficial effects of the coating device 10 provided in the embodiment of the present application.

While the present application has been described with reference to the preferred embodiments, various modifications may be made and components thereof may be replaced with equivalents without departing from the scope of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A coating device for coating electrode plates, comprising:
a first die head (11) and a second die head (12) connected with each other, wherein a flow channel (13) is formed between the first die head (11) and the second die head (12), and the flow channel (13) comprises a material inlet (131) and a material outlet (132); and
an adjusting member (14), wherein at least part of the adjusting member (14) is detachably arranged in the flow channel (13), the adjusting member (14) is used to adjust a size of a material along a width direction (Y) when the material is discharged from the material outlet (132), and the width direction (Y) is perpendicular to a stacking direction (Z) of the first die head (11) and the second die head (12), and perpendicular to a direction (X) from the material inlet (131) to the material outlet (132).

2. The coating device according to claim 1, wherein the coating device comprises two adjusting members (14), and the two adjusting members (14) are arranged along the width direction (Y) so that the material passes through an area of the flow channel (13) located between the two adjusting members (14) and then is discharged from the material outlet (132).

3. The coating device according to claim 2, wherein end surfaces (141) of the two adjusting members (14) close to the material outlet (132) have the same size along the width direction (Y).

4. The coating device according to claim 3, wherein the two adjusting members (14) are symmetrically distributed with respect to a central axis of the flow channel (13).

5. The coating device according to any one of claims 1 to 4, wherein the size of the material along the width direction (Y) when the material is discharged from the material outlet (132) is greater than a size of the material inlet (131) along the width direction (Y).

6. The coating device according to any one of claims 1 to 5, wherein the flow channel (13) comprises a material channel (133) located between the material inlet (131) and the material outlet (132) through which the material flows, and an inner wall of the material channel (133) comprises a portion of an inner wall of the flow channel (13) and a portion of a surface of the adjusting member (14).

7. The coating device according to claim 6, wherein along the stacking direction (Z) of the first die head (11) and the second die head (12), an orthographic projection of an end of the material inlet (131) close to the material outlet (132) is a line segment AA', an orthographic projection of the material channel (133) on an end of the material outlet (132) away from the material inlet (131) is a line segment BB', intersections between a projection of the line segment BB' along a direction from the material outlet (132) to the material inlet (131) with the inner wall of the flow channel (13) are C and C' respectively, and an orthographic projection of an edge of the inner wall of the material channel (133) is located in a triangular area ABC and/or a triangular area A'B'C'.

8. The coating device according to claim 6 or 7, wherein, along the direction (X) from the material inlet (131) to the material outlet (132), a size of the material channel (133) along the width direction (Y) gradually increases.

9. The coating device according to claim 8, wherein, along the direction (X) from the material inlet (131) to the material outlet (132), inner walls of the material channel (133) oppositely arranged along the width direction (Y) comprise straight line segments and/or arc segments.

10. The coating device according to claim 6 or 7, wherein the material channel (133) comprises a first channel (1331) connected to the material inlet (131) and a second channel (1332) connected to the material outlet (132), and
along the direction (X) from the material inlet (131) to the material outlet (132), a size of the first channel (1331) along the width direction (Y) gradually increases, and a size of the second channel (1332) along the width direction (Y) remains unchanged.

11. The coating device according to claim 10, wherein, along the stacking direction (Z) of the first die head (11) and the second die head (12), a size of the first channel (1331) is greater than a size of the second channel (1332).

12. The coating device according to any one of claims 6 to 11, wherein, along the stacking direction (Z) of the first die head (11) and the second die head (12), a size of the material channel (133) is smaller than a size of the material inlet (131), and is greater than or equal to a size of the material outlet (132).

13. The coating device according to any one of claims 1 to 12, wherein the first die head (11) is provided with a first groove (1301) opening toward the second die head (12), the first groove (1301) is used to form the flow channel (13), a second groove is formed in an edge of a bottom wall of the first groove (1301), the second groove (1302) extends from the material inlet (131) to the material outlet (132), and a depth of the second groove (1302) is greater than a depth of the first groove (1301).

14. The coating device according to claim 13, wherein the adjusting member (14) comprises a first part (144) and a second part (145) connected to each other, the first part (144) is located in an area of the first groove (1301) other than the second groove (1302), the second part (145) is located in the second groove (1302), and the second part (145) is used to limit the position of the adjusting member (14).

15. The coating device according to any one of claims 1 to 14, wherein the first die head (11) comprises a first opening (1311), the second die head (12) comprises a second opening (1312) corresponding to the first opening (1311), and the first opening (1311) and the second opening (1312) are used to form the material inlet (131) when the first die head (11) and the second die head (12) are engaged.

16. The coating device according to any one of claims 1 to 15, wherein a size of the end surface (141) of the adjusting member (14) close to the material outlet (132) along the width direction (Y) is greater than or equal to 10 mm.

17. The coating device according to any one of claims 1 to 16, wherein roughness of a surface (142) of the adjusting member (14) facing the first die head (11) is less than or equal to 0.4 µm.

18. The coating device according to any one of claims 1 to 17, wherein roughness of a surface (143) of the adjusting member (14) in contact with the material is less than or equal to 0.1 µm.

19. The coating device according to any one of claims 1 to 18, wherein elastic modulus of the adjusting member (14) is less than or equal to 20% of elastic modulus of the first die head (11) and greater than or equal to 10 MPa.

20. A battery production system, comprising the coating device according to any one of claims 1 to 19.
